# EUROPÄISCHE PATENTSCHRIFT

(11) **EP 1 476 009 B1**
(45) Veröffentlichungstag und Bekanntmachung des Hinweises auf die Patenterteilung: **14.05.2008**
(21) Anmeldenummer: 03714752.7
(22) Anmeldetag: 21.02.2003
(51) Int. Cl.: A01G 1/08

(54) **BAUELEMENT ZUR BILDUNG VON RASEN- ODER BEET-EINFASSUNGEN ODER DERGLEICHEN**
MODULAR ELEMENT FOR FORMING LAWN OR FLOWERBED BORDERS OR THE LIKE
ELEMENT MODULAIRE POUR LA FORMATION DE BORDURES OU ANALOGUES POUR PELOUSES OU PLATES-BANDES

(30) Priorität: 21.02.2002 DE 20202732 U; 10.01.2003 DE 20300349 U
(43) Veröffentlichungstag der Anmeldung: 17.11.2004
(73) Patentinhaber: Marley Deutschland Gmbh, 31513 Wunstorf (DE)
(72) Erfinder: HEINEMANN, Udo Marley Deutschland GmbH, 31513 Wunstorf (DE); BALKE, Olaf Marley Deutschland GmbH, 31513 Wunstorf (DE)
(74) Vertreter: Glawe, Delfs, Moll
(86) Internationale Anmeldenummer: PCT/EP2003/001806
(87) Internationale Veröffentlichungsnummer: WO 2003/069976

(56) Entgegenhaltungen:
- WO-A-00/04758
- US-A- 3 373 668
- US-A- 4 945 675

## Beschreibung

Die Erfindung betrifft ein Bauelement, das insbesondere für Rasen- oder Beet-Einfassungen verwendet werden kann. Andere Anwendungen, wie zum Beispiel zur Markierung oder Abgrenzung von Verkehrsflächen, sind ebenfalls denkbar. Für derartige Bauelemente wird häufig, und auch in der folgenden Beschreibung, der Ausdruck "Kantenstein" verwendet, wobei dieser Ausdruck jedoch keine Einschränkung bezüglich des Materials bedeutet Das Bauelement bzw. der Kantenstein kann aus beliebigem Material bestehen, wie zum Beispiel Beton, Keramik oder Kunststoff. Vorzugsweise ist der erfindungsgemäße Kantenstein aus Kunststoff durch Spritzgießen hergestellt.

Bekannt und im Handel erhältlich sind Rasenkantensteine aus Beton, die versenkt und oberflächenbündig verlegt werden, so daß sie das Rasenmähen nicht behindern. Sie sind an einem Ende konvex und an anderen Ende konkav gerundet, so daß sie im Winkel zueinander verlegt werden können, um Rasen- oder Beet-Einfassungen mit nicht geradem Verlauf verlegen zu können. Rasenkantensteine dieser Art sind auch in EP 1 081 314 A1 beschrieben.

Aus EP 0 721 295 B1, EP 0 716 803 A1 und WO 00/04758, sind Rasen- oder Beet-Kantensteine bekannt, die die Form von nach unten offenen Kästen haben und durch Kupplungselemente miteinander verbindbar sind. Gemäß EP 0 721 295 B 1 kann durch das Innere der kastenförmigen Steine und ihre rohrförmigen Verbindungsmittel eine kabelförmige Lichterkette hindurchgefädelt werden, die die transparent ausgebildeten Kantensteine von innen erleuchtet. Das Einfädeln eines solchen Kabels ist mühsam, und ein nachträglicher Zugang zu dem Kabel an der verlegten Rasen- oder Beet-Einfassung ist nicht möglich.

Aus US 5 535 545 A ist eine Rasen- oder Beet-Einfassung bekannt, bestehend aus nach unten spitz zulaufenden Plattenelementen, die in den Erdboden eintreibbar sind und an ihrer Oberseite eine konkave Auflage für einen Gartenschlauch bilden, und aus einer auf die Platten aufklemmbaren, U-förmigen Abdeckung. Dieses Einfassungssystem ist nicht oberflächenbündig verlegbar und nicht begehbar bzw. mit Rasenmäher befahrbar. Auch ist es, insbesondere wegen Form der Abdeckungen, nicht möglich, aneinandergrenzende Elemente im Winkel zueinander anzuordnen und so einen gekrümmten Verlauf der Einfassung zu realisieren.

Der Erfindung liegt die Aufgabe zugrunde, ein Bauelement in Form eines Kantensteins zur Verfügung zu stellen, mit dem oberflächenbündig verlegte, begeh- bzw. befahrbare Rasen- oder Beet-Einfassungen auch mit beliebig gekrümmten Verlauf realisiert werden kann, und das die zusätzliche Funktion aufweist, daß eine aus aneinanderstoßenden Kantenstein verlegte Rasen- oder Beet-Einfassung einen durchgehenden Kabel- oder Schlauchkanal für die Aufnahme eines elektrischen Kabels und/oder eines Bewässerungsschlauches und/oder einer beliebigen anderen Leitung aufweist.

Eine weitere Aufgabe besteht darin, einen Kantenstein anzugeben, der ein besonders für die Herstellung aus Kunststoff im Spritzgießverfahren geeignete Konstruktion aufweist.

Die erfindungsgemäße Lösung der Aufgabe ist im Anspruch 1 angegeben. Die abhängigen Ansprüche beziehen sich auf weitere vorteilhafte Merkmale der Erfindung.

Eine Ausführungsform der Erfindung wird anhand der Zeichnungen näher erläutert. Es zeigt:
- Fig. 1: einen erfindungsgemäßen Kantenstein in perspektivischer Ansicht,
- Fig. 2: einen Querschnitt durch den Kantenstein von Fig. 1,
- Fig. 3: eine Ansicht des Kantensteins von Fig. 1 von unten,
- Fig. 4: zwei geradlinig aneinanderstoßende Kantensteine mit abgehobenen Deckeln,
- Fig. 5: in Schrägansicht von oben zwei im Winkel aneinanderstoßende Kantensteine mit weggenommenen Deckel,
- Fig. 6: in perspektivischer Ansicht von unten zwei geradlinig aneinanderstoßende Kantensteine ohne Deckel,
- Fig. 7: einen Längsschnitt entlang der Längsmittelebene der aneinandergrenzenden Kantensteine von Fig. 6.,
- Fig. 8: in perspektivischer Ansicht zwei Kantensteine gemäß einer anderen Ausführungsform der Erfindung,
- Fig. 9 und 10: die Kantensteine gemäß Fig. 8 im Längsschnitt beziehungsweise in einer Ansicht von unten,
- Fig. 11: einen Querschnitt des Kantensteins entsprechend der Linie x-x von Fig. 10,
- Fig. 12: perspektivisch einen mit dem Kantenstein gemäß Fig. 8 bis 11 kombinierbaren, jedoch funktionsmäßig abweichend ausgestalteten Kantenstein,
- Fig. 13: eine Anordung von aneinandergereihten, funktionsmäßig unterschiedlich ausgestalteten Kantensteinen gemäß der Erfindung,
- Fig. 14 bis 17: zeigen jeweils perspektivisch die Details der in Fig. 13 verwendeten, verschieden ausgestalteten Kantenelemente.

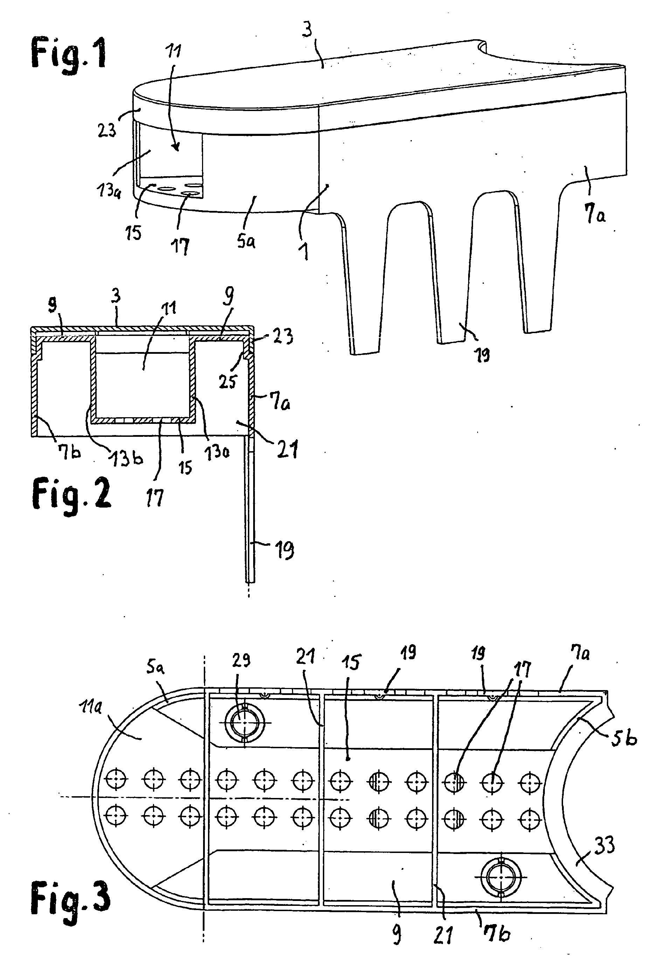

Der in Fig. 1 bis 3 dargestellte, als Kantenstein zu verwendende Bauelement besteht aus zwei Teilen, einem Unterteil 1 und einem Oberteil bzw. Deckel 3. Der Kantenstein hat insgesamt die Form eines länglichen Blockes, dessen beide Enden von kreisbogenförmig gekrümmten Stirnwänden 5a, 5b begrenzt sind, wobei die Stirnwand 5a am einen Ende konvex und die andere Stirnwand 5b mit gleichem Radius konkav gekrümmt ist. Das Unterteil 1 ist, wie aus Fig. 2 ersichtlich, ein dünnwandiges Spritzgußteil mit zwei parallelen Seitenwänden 7a, 7b und einer oberen Wand 8, 9, in der ein nach oben offener Kanal 11 mit Seitenwänden 13a, 13b und einer Bodenwand 15 ausgebildet ist. In der Bodenwand 15 ist eine Vielzahl von Ablauföffnungen 17 ausgebildet. In Verlängerung der einen Seitenwand 7a des Unterteils 1 sind nach unten gerichtete Zungen 19 zur besseren Verankerung des Kantensteins im Erdreich angeformt. Das Unterteil 1 ist durch mehrere in Querrichtung zwischen den Seitenwänden 7a, 7b verlaufende Versteifungswände 21 versteift.

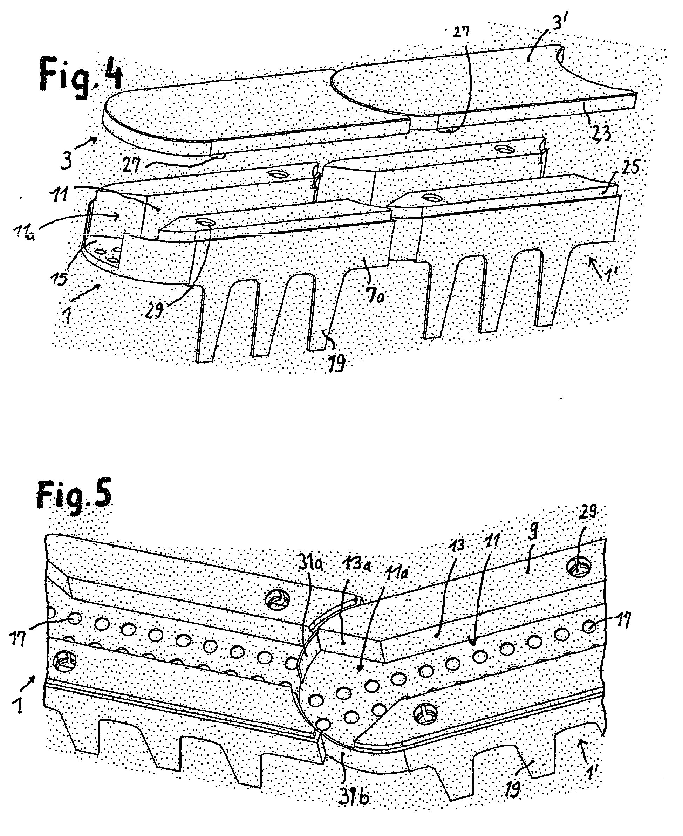

Der Deckel 3 ist eine flache Platte, deren Form der Grundrissform des Unterteils 1 mit konkav bzw. konvex gekrümmten Stirnseiten entspricht und die an ihrem Rand umlaufend einen nach unten gerichteten Bund 23 trägt, der von einem stufenförmigen Rücksprung 25 des Unterteils aufgenommen und zentriert wird. Zusätzlich sind an der Unterseite des Dekkels vorspringende Zapfen 27 (Fig. 4) sein, die druckknopfartig in entsprechende Aufnahmeöffnungen 29 des Unterteils einrasten können, um den Deckel 3 mit Klemmsitz am Unterteil 1 zu halten. Der Klemmsitz kann aber auch alleine durch den umlaufenden Bund 23 bewirkt werden.

Der nach oben offene Kanal 11 im Unterteil 1, der von der Bodenwand 15 und den beiden Seitenwänden 13a, 13b begrenzt wird, ist auch nach den beiden Enden des Unterteils 1 hin offen. Am konvex gerundeten Ende hat der Kanal 11 eine sich trichterförmig erweiternde Ausmündung 11 a, die von entsprechend abgewinkelten Bereichen 13c seiner Seitenwände 13 begrenzt wird. (siehe auch Fig. 5) Der Öffnungswinkel der Erweiterung des Kanals 11 kann beispielsweise 30° betragen. Die trichterförmige Erweiterung des Kanals 11 ermöglicht es, die volle Breite des Kanaldurchschnitts auch dann beizubehalten, wenn aneinanderstoßende Kantensteine im Winkel zueinander verlegt werden.

Wie insbesondere Fig. 5 zeigt, sind die seitlichen Bereiche der Erweiterung 11 a des Kanals 11 durch dünne Stirnwandteile 31a, 31b verschlossen. Werden zwei Kantensteine im Winkel zueinander verlegt, so verhindert das Stirnwandteil 31 b an der Winkelaußenseite, daß der Kanal 11 an dieser Stelle seitlich offen ist. Die dünnen Stirnwandteile 31 a, 31 b sind wegbrechbar. Die jeweils an der Winkelinnenseite liegende Stirnwandteil 31a wird weggebrochen, um den vollen Kanalquerschnitt freizugeben.

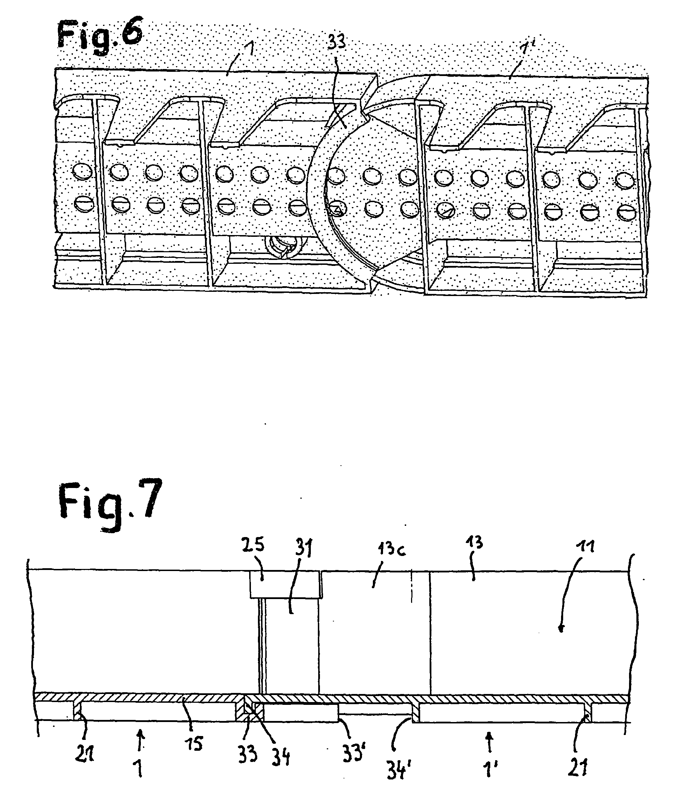

Wie insbesondere in Fig. 6 und 7 gezeigt, hat das Kanteristeinunterteil 1 an seinem konkaven Ende einen vorspringenden hakenförmigen Stützflansch 33, der eine nach oben offene Nut bildet. Am konvexen Ende des Kantensteinunterteils 1 ist ein nach unten gerichteter halbkreisförmiger Steg 34 angeformt. Beim Verlegen der Kantensteine nimmt die vom hakenförmigen Flansch 33 gebildete Nut den Steg 34 des jeweils angrenzenden Kantensteins 1' auf, so daß die beiden Kantensteine zugfest miteinander gekoppelt sind. Die komplementäre Kreisbogenform von Nut 33 und Steg 34 gestattet eine beliebige Abwinkelung der Kantensteine 1,1' zueinander. Werden die Steine 1 und 1' im Winkel zueinander verlegt, so kann das Ende 33' des hakenförmigen Flansches 33 gegen eine Stufe 34' des Steges 34 anschlagen, wodurch der maximale Verdrehungswinkel zwischen den Steinen 1 und 1' festgelegt wird.

Mit einer Vielzahl von Kantensteinen gemäß der dargestellten Ausführungsform, die geradlinig oder im Winkel aneinander stoßend verlegt werden, erhält man eine Rasen- oder Beet-Einfassung mit einem durchgehenden Kanal für die Aufnahme eines elektrischen Kabels und/oder eines Bewässerungsschlauchs und/oder einer beliebigen sonstigen Leitung. Das im Kanal verlegte Kabel und/oder der Schlauch kann permanent, d.h. das ganze Jahr über liegenbleiben. Das Ausheben eines gesonderten Grabens für das Verlegen des Schlauches oder Kabels ist nicht erforderlich. Durch Abheben des Deckels 3 ist das Kabel oder der Schlauch jederzeit zugänglich. Insbesondere kann durch Abheben des jeweiligen Dekkels gezielt auf das Ende des Schlauchs oder Kabels zugegriffen werden, um dort z.B. einen Bewässerungsregner oder ein Elektrogerät, z.B. einen elektrischen Rasenmäher anzuschließen.

In weiterer Ausgestaltung der Erfindung kann einer oder mehrere der Kantensteine mit einem speziellen Deckel ausgerüstet werden, der mit einer Steckdose für einen Stromanschluß oder für einen Wasseranschluß ausgerüstet ist (in den Zeichnungen nicht dargestellt). In diesem Fall kann z.B. ein Bewässerungsregner oder ein elektrischer Rasenmäher angeschlossen werden, ohne den Deckel öffnen zu müssen.

Es ist auch möglich, den Deckel 3 transparent auszubilden und im Kanal 11 eine an das elektrische Kabel angeschlossene Lampe unterzubringen, um die Rasen- oder Beet-Einfassung zu illuminieren.

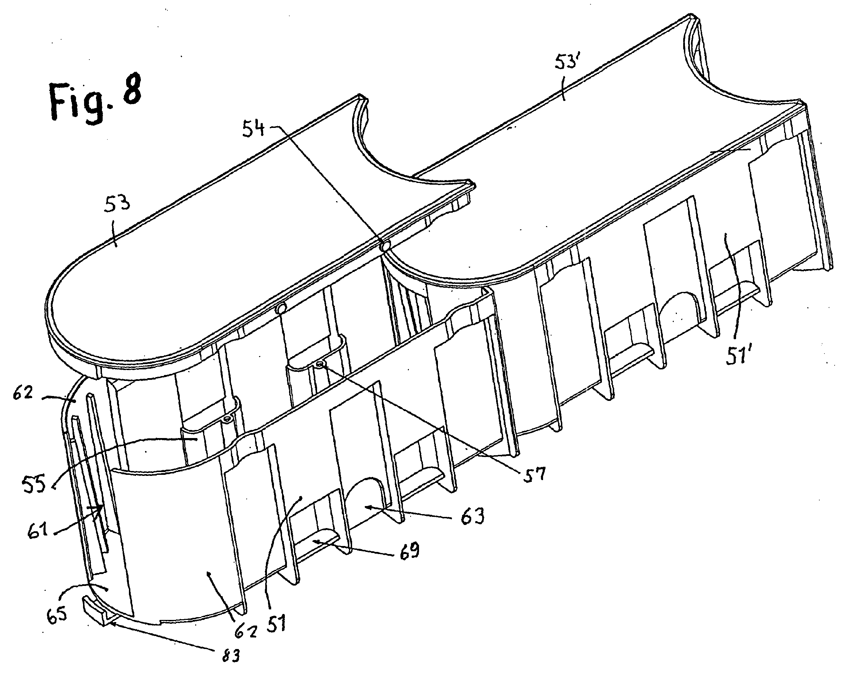

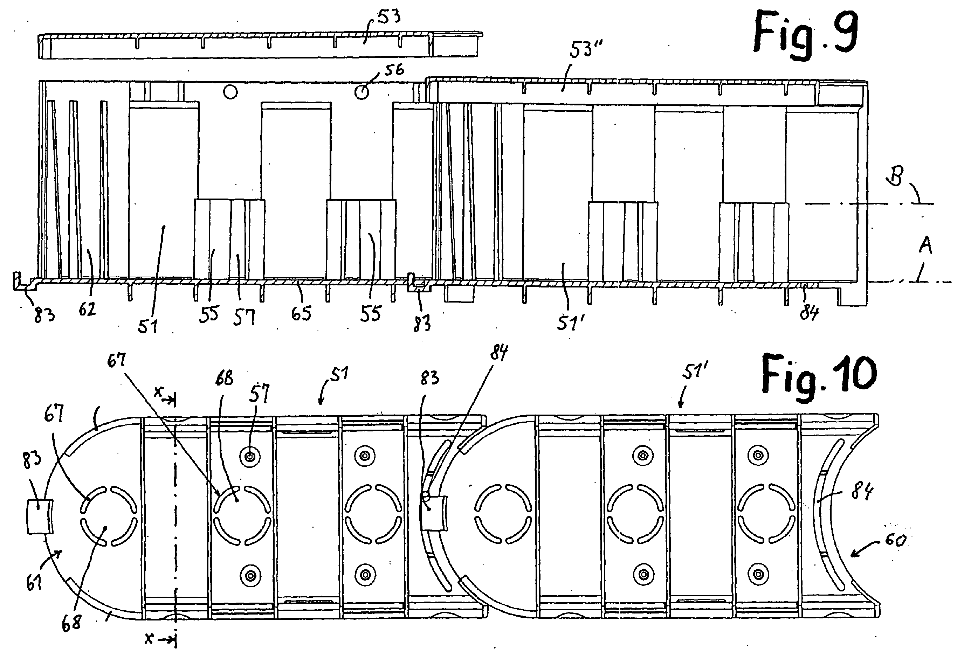

Die Fig. 8 bis 17 zeigen Kantensteine gemäß einer zweiten Ausführungsform der Erfindung, die eine von der Ausführungsform gemäß Fig. 1 bis 7 abweichende Geometrie hat. Die Fig. 8, 9 und 10 zeigen zwei miteinander gekoppelte Kantensteine, die jeweils ein Unterteil 51, 51' und einen Oberteil oder Deckel 53, 53'. Unterteil und Deckel sind beide an einem Ende konkav und am anderen Ende mit gleichem Radius konvex gerundet. Der Deckel 53 hat für die Schnappbefestigung am Unterteil 51 seitliche Vorsprünge 54, die in Vertiefungen 56 (Fig. 9) des Unterteils einrasten können. Das Unterteil 51 beziehungsweise 51' hat eine größere Höhe als bei der Ausführungsform gemäß Fig. 1 bis 7 und besitzt einen tiefliegenden Boden 65, den eine untere Systemebene A definiert, auf der zum Beispiel ein durchgehendes Kabel oder ein Wasserschlauch abgelegt werden kann. Stirnseitige Öffnungen 60, 61 in den konkav und konvex gekrümmten Enden der Kantensteine schaffen einen durchgehenden Kanal zur Verlegung des Kabels bzw. Schlauches. Am konvexen Ende ist die Öffnung 61 in ihrer Breite durch gekrümmte, nach innen vorspringende Wandteile 62 begrenzt, an die sich die vertikalen Kanten der Seitenwände eines im Winkel anschließenden Elements abdichtend anlegen können.

An den Seitenwänden des Unterteils 51 sind nach innen vorspringende Sockel 55 angeformt, die sich, vom Boden 65 ausgehend, über einen Teil der lichten Höhe des Unterteils 51 erstrecken und mit ihren oberen Ende Auflageschultern bilden, die eine zweite, obere Systemebene B definieren. Auf diesen von den Sockeln 55 gebildeten Schultern können in der zweiten Systemebene B Einbauelemente, wie zum Beispiel ein Einlegeboden, eine elektrische Verteilerdose oder dergleichen montiert werden. Den Abstützsockeln 55 sind ferner Schraubdome 57 für die Aufnahme von selbstschneidenden Befestigungsschrauben zugeordnet, mit denen die Zusatzelemente befestigt werden können.

An den Seitenwänden des Unterteils 51 befinden sich ferner Verankerungsstege 69 zur Verankerung des Kantensteins im Erdreich sowie herausbrechbare Wandbereiche 63 für das Schaffen einer Öffnung für das seitliche Einführen eines Kabels oder Schlauches. An der konvexen Stirnseite befindet sich ein Haken 83, der gemäß Fig. 10 von unten her in einen bogenförmigen Schlitz eingreifen kann, der im Boden eines angrenzenden Kantensteins an dessen konkaven Ende ausgebildet ist. Damit können aneinandergrenzende Kantensteine miteinander schwenkbar gekoppelt werden, wobei der Schwenkbereich ca. 30° in beiden Richtungen betragen kann.

Wie aus Fig. 10 ersichtlich, sind ferner im Boden 65 des Unterteils 51 beziehungsweise 51' bogenförmige Schlitzöffnungen 67 so ausgebildet, daß sie einerseits als Entwässerungsöffnungen für den Ablauf von Wasser dienen können und andererseits einen herausbrechbaren Bodenbereich 68 umgrenzen, durch dessen Herausbrechen eine Öffnung für das Einführen eines Kabels oder Schlauches von unten geschaffen werden kann. In Fig. 10 sind ferner die unteren Ausmündungen der Schraubdome 57 für das Einführen von Befestigungsschrauben zu erkennen.

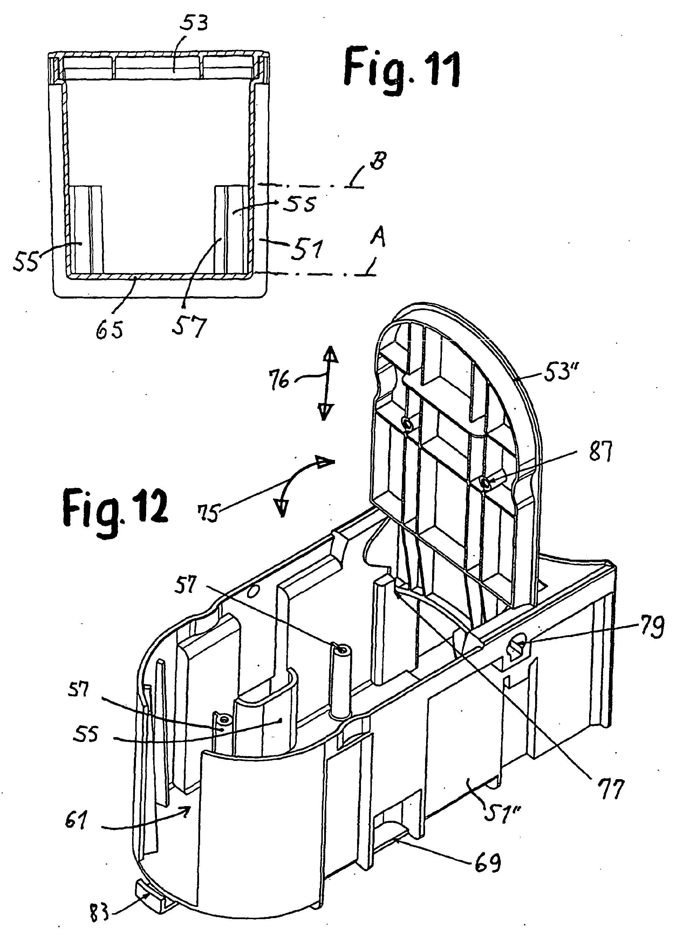

Die in Fig. 12 gezeigte Ausführungsform eines Kantensteins unterscheidet sich von der Ausführungsform gemäß Fig. 8 bis 11 hauptsächlich dadurch, daß das Oberteil beziehungsweise der Deckel 53" am Unterteil 51" schwenkbar gelagert ist. Hierzu dienen seitlich vorspringende Lagerzapfen (nicht dargestellt) des Deckels 53", die in Lageröffnungen 79 des Unterteils 51" eingreifen. Der Deckel 53" kann relativ zum Unterteil entsprechend dem Pfeil 75 um 90° aufgeklappt werden. Jede Lageröffnung 79 ist nach unten unrund verlängert, so daß der Deckel 53 durch eine Bewegung entsprechend dem Pfeil 76 nach unten bewegt werden kann, um hinter eine Arretierschulter 77 einzugreifen, die den Deckel 53' in der lotrechten, aufgeklappten Stellung arretiert. Zum Lösen der Arretierung kann der Deckel 53' entsprechend dem Pfeil 76 nach oben angehoben werden. Das Unterteil 51' gemäß Fig. 12 weist ebenfalls Abstützsockel 55 auf, die eine obere Systemebene definieren, sowie Schraubdome 57, die in diesem Fall getrennt von den Abstützsockeln 55 ausgebildet sind, zur Aufnahme von Befestigungsschrauben. Auch im Deckel 53" sind Schraubdome 87 angeformt.

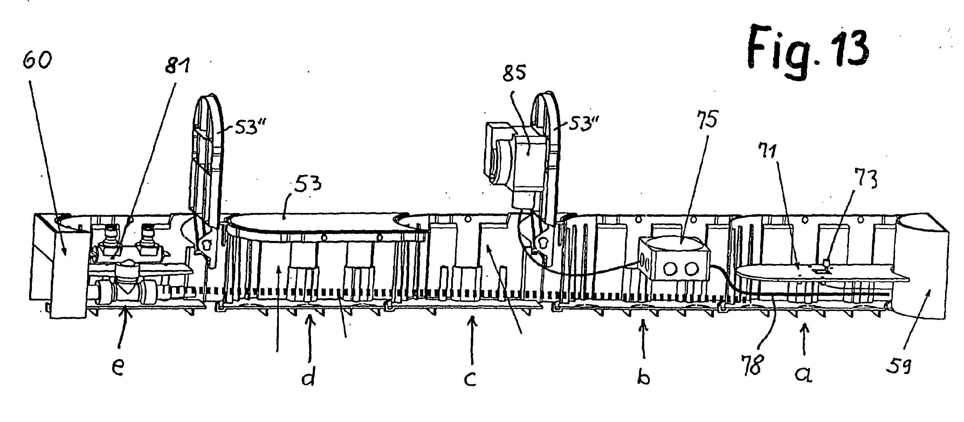

Die Fig. 13 veranschaulicht, wie Kantentelemente gemäß Fig. 8 beziehungsweise Fig. 12 in Kombination miteinander zur Bildung einer durchgehenden Rasen- oder Beetkante verlegt werden können, wobei die Elemente mit unterschiedlichen Funktionen ausgerüstet sein können. Die gemäß Fig. 13 aneinandergereihten Kantensteinelemente sind von rechts nach links mit a, b, c, d, e bezeichnet. Am rechten Ende wird die Reihe durch ein konvexes Abschlußstück 59 und am linken Ende durch ein konkaves Abschlußstück 60 abgeschlossen. Zwischen den Abschlußstücken 59, 60 bilden die aneinandergereihten Elemente auf ihrer unteren oder Bodenebene einen durchgehenden Kanal für die Verlegung eines Wasserleitungsschlauches 76 (in Fig. 13 schematisch durch eine Reihe von vertikalen, schwarzen Balken angedeutet) und/oder eines elektrischen Kabels 78.

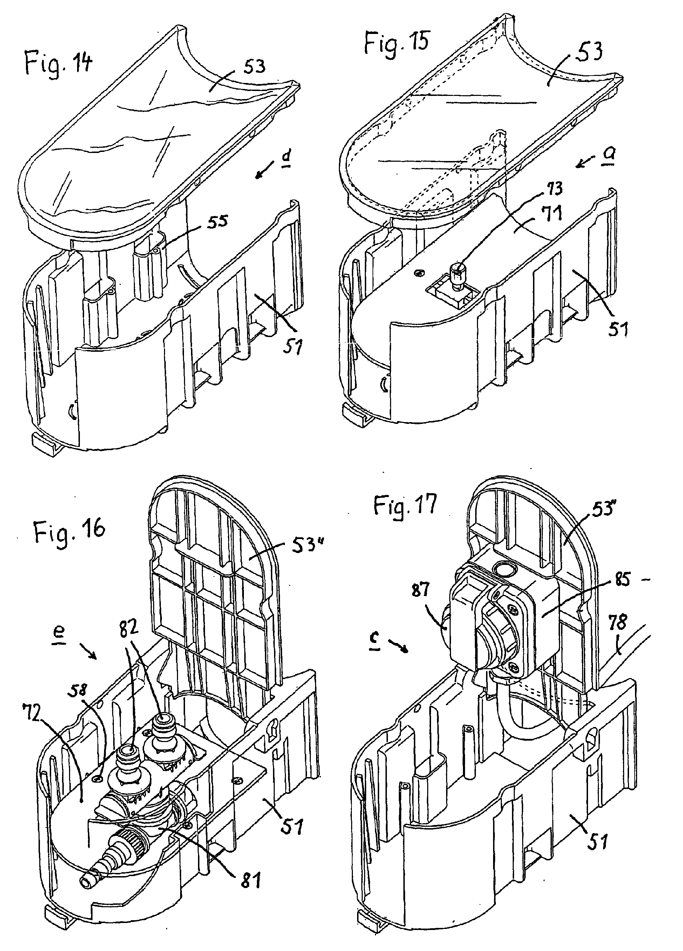

Das in Fig. 13 rechte Element a, das auch in Fig. 15 dargestellt ist, hat im wesentlichen die in Fig. 8 dargestellte Ausgestaltung, ist jedoch zu einem Beleuchtungselement ausgestaltet worden durch Einsetzen eines Zwischenbodens 71 der sich auf die Abstützsockel 55 des Unterteils 51 abstützt. Der Zwischenboden 71 trägt ein elektrisches Leuchtelement 73 und ist als Reflektor für dasselbe ausgebildet. Der (in Fig. 13 nicht dargestellte) Deckel 53 für das Kantenelement a ist entsprechend lichtdurchlässiger ausgebildet.

Das von rechts her zweite Element b in Fig. 13 hat ebenfalls die in Fig. 8 dargestellte Formgebung eines Basiselementes. Auf seinem Abstützsockel 55 ist in der oberen Systemebene eine elektrische Verteilerdoses 75 eingesetzt und mittels Schrauben befestigt.

Das dritte Element c in Fig. 13, das in Fig. 17 zusätzlich dargestellt ist, hat im Prinzip die in Fig. 12 gezeigte Formgebung mit aufklappbarem Deckel 53". An der Innenseite dieses Deckels 53" ist eine elektrische Steckdose 85 mit wasserdichter Abdeckung 86 befestigt, an die bei hochgeklapptem Deckel 53' das Anschlußkabel eines elektrischen Gerätes, zum Beispiel eines Rasenmähers, angeschlossen werden kann.

Das vierte Element d in Fig. 13 ist ein Leer- oder Basiselement und hat die in Fig. 8 sowie in Fig. 14 dargestellte Formgebung. Der bei diesem Element d gezeigte aufschnappbare Deckel 53 ist auch bei den Elementen a und b in Fig. 13 hinzuzudenken.

Das in Fig. 13 linke Element e, das auch in Fig. 16 dargestellt ist, hat wieder die in Fig. 12 dargestellte Grundform mit aufklappbarem Deckel 53". Im Inneren des Unterteils 51 dieses Elements e ist ein auf dem Stützsockeln 55 (Fig. 12) abgestützte und mittels Schrauben 58 and den Schraubsockeln 57 befestigter Zwischenboden 72 eingesetzt, der einen an den Schlauch 76 ankoppelbaren Wasseranschluß 81 trägt, wie zum Beispiel zwei Kupplungsnippeln 82 für das Anschließen eines Gartenschlauchs und/oder eines Rasensprengers.

Die Deckel 3 bzw. 53 aller Elemente können an ihrer Oberseite eine Reliefstruktur aufweisen, um sie rutschfest zu machen und/oder um zusammen mit einer geeigneten Farbgebung das Aussehen von Naturstein zu imitieren.

## Patentansprüche

1. Bauelement zur Verwendung als Kantenstein für Rasen- oder Beet-Einfassungen oder dergleichen, in Form eines länglichen Blocks, der im Erdreich versenkt oberflächenbündig verlegbar ist und eine ebene, begehbare Oberseite aufweist, wobei das Bauelement (1) an seinem einen Ende eine konvexe Abrundung und an seinem anderen Ende eine dazu komplementäre konkave Ausrundung aufweist derart, daß mit ihren Stirnseiten lückenlos aneinander angrenzende Bauelemente in beliebigem Winkel zueinander verlegt werden können,
**dadurch gekennzeichnet, daß** das Bauelement aus einem Unterteil (1, 51), das einen in Längsrichtung durchgehenden und an beiden Stirnseiten offenen Kanal (11) bildet,
und aus einem auf das Unterteil (1,51) aufgesetzten Deckel (3, 53) besteht,
wobei die Kanalausmündung (11a, 61) an dem konvex gekrümmten Ende des Bauelements durch gekrümmte, nach innen vorspringende Wandteile (31a, 31b; 61a, 61b) in der Breite derart begrenzt ist, daß sie ohne seitliche Lücken an die Kanalmündung am konkaven Ende eines angrenzend angeordneten Bauelements anschließt.

2. Bauelement nach Anspruch 1, **dadurch gekennzeichnet , daß** der Dekkel (3) auf dem Unterteil (1) durch eine Schnappverbindung (27, 29) lösbar befestigt ist.

3. Bauelement nach Anspruch 1, **dadurch gekennzeichnet, daß** der Dekkel (3 ") an dem Unterteil (51) hochklappbar gelagert ist.

4. Bauelement nach Anspruch 3, **dadurch gekennzeichnet , daß** der Dekkel (53") in der hochgeklappten Stellung arretierbar ist.

5. Bauelement nach einem der Ansprüche 1 bis 4,
**dadurch gekennzeichnet, daß** in der Bodenwand (15) des Unterteils (1) mindestens eine Ablauföffnung (17) vorgesehen ist.

6. Bauelement nach einem der Ansprüche 1 bis 5,
**dadurch gekennzeichnet , daß** in dem Unterteil (1) ein Leuchtelement (73) angeordnet und der Deckel lichtdurchlässig ausgebildet ist.

7. Bauelement nach einem der Ansprüche 1 bis 6,
**dadurch gekennzeichnet, daß** in dem Bauelement ein Steckanschluß (81, 82) für das Anschließen eines Schlauches oder eine elektrische Steckdose (85) angeordnet ist.

8. Bauelement nach einem der Ansprüche 1 bis 7,
**dadurch gekennzeichnet, daß** es an seinem einen Ende einen hakenförmigen Kupplungsvorsprung (83) und am anderen Ende eine für die Aufnahme eines derartigen Kupplungsvorsprungs (83) angepaßte Aufnahme (84) in Form eines Schlitzes und dergleichen aufweist derart, daß zwei aneinandergrenzende Bauteile durch Ineinandergreifen des Kupplungsvorsprungs (83) und der Aufnahme (84) zugfest miteinander koppelbar sind,
wobei Kupplungsvorsprung (83) und Aufnahme (84) derart kreisbogenförmig angeordnet sind, daß die Bauteile unter beliebigem Winkel zueinander kuppelbar sind.

9. Bauelement nach einem der Ansprüche 1 bis 8,
**dadurch gekennzeichnet, daß** es im unteren Bereich einen Boden (65) aufweist, der eine Auflagefläche für ein Kabel, einen Schlauch oder dergleichen bildet, und daß im Inneren des Unterteils (1) Auflageschultern (55) mit Abstand oberhalb des Bodens (65) vorgesehen sind, auf denen im Bauelement eingebaute Einbaukomponenten abgestützt werden können.

10. Aus mehreren Bauelementen gemäß den Ansprüche 1 bis 9 bestehendes System zur Bildung einer Rasen- oder Beet-Einfassung, **dadurch gekennzeichnet , daß** das System verschieden ausgerüstete Bauelemente umfaßt, nämlich mehrere Bauelemente, die nur einen durchgehenden Kanal (11) ohne Einbauten bilden, und mindestens eines der folgenden Bauelemente:
- ein Bauelement mit eingebauter Leuchte (73) und lichtdurchlässigem Deckel;
- ein Bauelement mit elektrischer Steckdose (85); und oder
- ein Bauelement mit einem Schlauchanschluß (81, 82).

## Claims

1. Modular element for use as an edging stone for lawn or flowerbed borders or the like, in the form of an elongated block that when embedded in the earth can be laid flush with its surface, and that has a flat top that can be walked on, wherein the modular element (1) has at its one end a convex outward rounding and at its other end a concave inward rounding complementary to this, such that contiguous modular elements can be laid down at a desired angle to one another without forming a gap at their faces,
**characterized** such that the modular element consists of a lower part (1, 51) that forms a channel (11) which is continuous in the longitudinal direction and is open at both faces, and a lid (3, 53) that is set upon the lower part (1,51),
wherein the outlet (11a, 61) of said channel at the convexly rounded end of the modular element is bounded in width by inwardly projecting curved wall parts (31a, 31b, 61a, 61b) in such a way that it connects up without any lateral gaps to the mouth of the channel at the concave end of an adjoiningly arranged modular element.

2. Modular element based on Claim 1, **characterized** such that the lid (3) is detachably attached to the lower part (1) by means of a snap-on connection (27, 29).

3. Modular element based on Claim 1, **characterized** such that the lid (3") is hinged on the lower part (51) in such a way that it can be raised up.

4. Modular element based on Claim 3, **characterized** such that the lid (53 ") can be arrested in the raised position.

5. Modular element based on one of the claims 1 to 4,
**characterized** such that at least one drain opening (17) is provided in the floor wall (15) of the lower part (1).

6. Modular element based on one of the claims 1 to 5,
**characterized** such that a luminous element (73) is arranged in the lower part (1) and the lid is constructed to be permeable to light.

7. Modular element based on one of the claims 1 to 6,
**characterized** such that a plug-in termination (81, 82) for the connecting up of a hose or else an electrical socket (85) is arranged within the modular element.

8. Modular element based on one of the claims 1 to 7,
**characterized** such that it has at its one end a hook-shaped coupling projection (83) and at the other end a receiving means (84) in the form of a slot and the like which is suited to the receiving of such a coupling projection (83), such that two contiguous modular parts can be coupled together in such a way as to resist being pulled apart, by means of an interlocking of the coupling projection (83) and the receiving means (84), wherein the coupling projection (83) and receiving means (84) are arranged in the form of circular arcs in such a way that the modular parts can be coupled together at a desired angle.

9. Modular element based on one of the claims 1 to 8,
**characterized** such that in the lower area it has a floor (65), which forms a supporting surface for a cable, a hose, or the like, and such that in the interior of the lower part (1) supporting shoulders (55) are provided at a distance above the floor (65), which shoulders can provide support for built-in components installed in the modular element.

10. A system consisting of a number of modular elements according to claims 1 to 9 for forming a lawn or flowerbed border, **characterized** such that the system includes differently equipped modular elements, namely a plurality of modular elements that form only a single continuous channel (11) but without any built-in components, and at least one of the following modular elements:
- a modular element with a built-in lamp (73) and a lid permeable to light;
- a modular element with an electrical socket (85); and or
- a modular element with a hose hook-up (81, 82).

## Revendications

1. Elément modulaire destiné à être utilisé comme pierre de lisière pour bordures de pelouses ou de plates-bandes ou dispositifs similaires sous forme d'un bloc allongé qui peut être posé dans la terre à fleur de surface et qui comporte une face supérieure plane accessible, l'élément modulaire (1) comportant à l'une de ses extrémités un arrondi convexe et à l'autre de ses extrémités un congé concave complémentaire de ce dernier de telle sorte que des éléments modulaires adjacents par leurs faces frontales puissent être posés sans interstices selon n'importe quel angle les uns par rapport aux autres,
**caractérisé en ce que** l'élément modulaire est constitué d'une partie inférieure (1, 51) qui forme un canal (11) continu dans la direction longitudinale et ouvert sur les deux faces latérales et d'un couvercle (3, 53) posé sur la partie inférieure (1, 51),
l'orifice de sortie du canal (11a, 61) étant limité en largeur à l'extrémité en forme de courbure convexe de l'élément modulaire par des parties de mur (31a, 31 b ; 61a, 61b) recourbées faisant saillie vers l'intérieur de telle sorte qu'il se raccorde sans interstices latéraux à l'ouverture du canal à l'extrémité concave d'un élément modulaire adjacent.

2. Elément modulaire selon la revendication 1, **caractérisé en ce que** le couvercle (3) est fixé de manière amovible sur la partie inférieure (1) à l'aide d'un raccord encliquetable (27, 29).

3. Elément modulaire selon la revendication 1, **caractérisé en ce que** le couvercle (3") est logé de manière repliable dans la partie inférieure (51).

4. Elément modulaire selon la revendication 3, **caractérisé en ce que** le couvercle (53") peut être bloqué dans la position repliée.

5. Elément modulaire selon l'une quelconque des revendications 1 à 4, **caractérisé en ce qu'**il est prévu au moins une ouverture d'évacuation (17) dans la paroi de fond (15) de la partie inférieure (1).

6. Elément modulaire selon l'une quelconque des revendications 1 à 5, **caractérisé en ce qu'**un élément d'éclairage (73) est placé dans la partie inférieure (1) et **en ce que** le couvercle est transparent.

7. Elément modulaire selon l'une quelconque des revendications 1 à 6, **caractérisé en ce qu'**un raccord enfichable (81, 82) pour le raccordement d'un tuyau flexible ou une prise de courant électrique (85) est montée dans l'élément modulaire.

8. Elément modulaire selon l'une quelconque des revendications 1 à 7, **caractérisé en ce qu'**il comporte à l'une de ses extrémités une partie en saillie d'accouplement (83) et à l'autre de ses extrémités un logement (84) sous forme de fente et similaire, adapté pour loger une partie en saillie d'accouplement (83) de ce type, de telle sorte que deux éléments modulaires adjacents puissent être couplés l'un à l'autre de manière à résister à la traction par la mise en prise de la partie en saillie d'accouplement (83) et du logement (84), la partie en saillie d'accouplement (83) et le logement (84) étant disposés en forme d'arc de cercle de telle sorte que les éléments de construction peuvent être couplés les uns aux autres selon n'importe quel angle.

9. Elément modulaire selon l'une quelconque des revendications 1 à 8, **caractérisé en ce qu'**il comporte dans la zone inférieure un fond (65) qui forme une surface de pose pour un câble, un tuyau flexible ou un autre dispositif similaire et **en ce qu'**il est prévu à l'intérieur de la partie inférieure (1) des épaulements d'appui (55) placés à distance du fond (65) sur lesquels des composants encastrés dans l'élément modulaire peuvent s'appuyer.

10. Système constitué de plusieurs éléments modulaires selon l'une quelconque des revendications 1 à 9 pour la formation d'une bordure de pelouses ou de plates-bandes, **caractérisé en ce que** le système comprend des éléments modulaires équipés différemment, à savoir plusieurs éléments modulaires qui forment seulement un canal continu (11) sans composants encastrés et au moins l'un des éléments modulaires suivants :
- un élément modulaire avec un appareil d'éclairage encastré (73) et un couvercle transparent ;
- un élément modulaire avec une prise de courant électrique (85) ; et/ ou
- un élément modulaire avec un raccord de tuyau flexible (81, 82).
